# EUROPEAN PATENT APPLICATION

(11) **EP 2 821 905 A1**
(43) Date of publication of application: **07.01.2015**
(21) Application number: 13770212.2
(22) Date of filing: 20.03.2013
(51) Int. Cl.: G06F 3/048

(54) **THREE-DIMENSIONAL DISPLAY-BASED CURSER OPERATION METHOD AND MOBILE TERMINAL**

(30) Priority: 29.03.2012 CN 201210087689
(71) Applicant: Huawei Device Co., Ltd., Shenzhen, Guangdong 518129 (CN)
(72) Inventor: CHEN, Lei, Shenzhen Guangdong 518129 (CN)
(74) Representative: Pfenning, Meinig & Partner GbR
(86) International application number: PCT/CN2013/072902
(87) International publication number: WO 2013/143409

(57) **Abstract**

Embodiments of the present invention disclose a three-dimensional display-based cursor operation method and a mobile terminal, which are used to implement a visually three-dimensional cursor operation on a three-dimensional display mobile terminal. The method in an embodiment of the present invention includes: acquiring a finger image; generating, according to image information of the finger image, a three-dimensional cursor in a three-dimensional display interface corresponding to the image information; acquiring a movement position of the finger image; and determining a movement distance and a movement direction of the three-dimensional cursor according to the movement position.

## Description

### CROSS-REFERENCE TO RELATED APPLICATION

This application claims priority to Chinese Patent Application No. 201210087689.7, filed with the Chinese Patent Office on March 29, 2012 and entitled "THREE-DIMENSIONAL DISPLAY-BASED CURSOR OPERATION METHOD AND MOBILE TERMINAL", which is incorporated herein by reference in its entirety.

### TECHNICAL FIELD

The present invention relates to the field of electronic technologies, and in particular, to a three-dimensional display-based cursor operation method and a mobile terminal.

### BACKGROUND

Using a mobile terminal as an example, a touchscreen is a type of peripheral component for implementing point touch control of a two-dimensional display mobile terminal. A touch interface included by the touchscreen is on a same plane as a display interface of a two-dimensional liquid crystal display (LCD, Liquid Crystal Display), and therefore a purpose of controlling may be achieved by touching a displayed icon.

A three-dimensional LCD is a new type of LCD display technology, which depends on a raster technology, so that light rays of some dot matrices can only be emitted from specified directions, so as to ensure that a left eye and a right eye of a person can separately see different images, thereby implementing a three-dimensional display effect.

In a scenario in which a mobile terminal uses a three-dimensional LCD display technology, if a touchscreen technology is still used to implement touch control, because a plane on which a touchscreen is located is different from a plane on which a three-dimensional display object is located, display and touch are separated, and as a result, a three-dimensional touch control effect cannot be implemented.

### SUMMARY

Embodiments of the present invention provide a three-dimensional display-based cursor operation method and a mobile terminal, which are used to implement a visually three-dimensional cursor operation on a three-dimensional display mobile terminal.

An embodiment of the present invention provides a three-dimensional display-based cursor operation method, including: acquiring a finger image; generating, according to image information of the finger image, a three-dimensional cursor in a three-dimensional display interface corresponding to the image information; acquiring a movement position of the finger image; and determining a movement distance and a movement direction of the three-dimensional cursor according to the movement position.

Optionally, after the determining a movement distance and a movement direction of the three-dimensional cursor according to the movement position, the method includes:
when the three-dimensional cursor moves to a position of an operation icon in the three-dimensional display interface, and if the three-dimensional cursor coincides with three-dimensional coordinates of the operation icon, determining whether a current operation is a tap operation according to a hover time of the three-dimensional cursor.

Optionally, the determining whether a current operation is a tap operation according to a hover time of the three-dimensional cursor includes:
if the three-dimensional cursor leaves the position of the operation icon when the hover time of the three-dimensional cursor over the operation icon reaches a short tap time but does not reach a touch and hold time, determining that the current operation is a short tap operation; and
if the hover time of the three-dimensional cursor over the operation icon reaches the touch and hold time, determining that the current operation is a touch and hold tap operation.

Optionally, after the determining a movement distance and a movement direction of the three-dimensional cursor according to the movement position, the method further includes:
if displacement of the finger image is greater than a preset distance, and if a time used for moving the finger image from a previous position to a current position is less than a preset time limit, determining that the current operation is a slide operation.

Optionally, after the acquiring a finger image, the method includes:
generating N three-dimensional cursors if N finger images are acquired, and implementing a function of N-point touch control according to relative movements of the N three-dimensional cursors, where N is an integer greater than or equal to 2.

Optionally, the method further includes:
receiving a calibration instruction; acquiring a calibration position of the finger image; and storing three-dimensional coordinates of the calibration position as an original position.

Optionally, the generating, according to image information of the finger image, a three-dimensional cursor in a three-dimensional display interface corresponding to the image information includes:
acquiring a current position of the finger image by using the original position as a reference position, determining three-dimensional coordinates of the three-dimensional cursor in the three-dimensional display interface according to the reference position and image information of the current position, and generating the three-dimensional cursor on the three-dimensional coordinates.

Optionally, the acquiring a finger image includes:
acquiring a photographed image; and determining that the photographed image is the acquired finger image if the photographed image meets a finger feature, where the finger feature includes a finger thickness ratio and knuckle information.

An embodiment of the present invention provides a mobile terminal, including: a photographing unit, configured to acquire a finger image; a cursor generating unit, configured to generate, according to image information of the finger image, a three-dimensional cursor in a three-dimensional display interface corresponding to the image information; and a movement positioning unit, configured to determine a movement distance and a movement direction of the three-dimensional cursor according to a movement position of the finger image.

Optionally, the mobile terminal further includes:
a tap determining unit, configured to, when the three-dimensional cursor moves to a position of an operation icon in the three-dimensional display interface, and if the three-dimensional cursor coincides with three-dimensional coordinates of the operation icon, determine whether a current operation is a tap operation according to a hover time of the three-dimensional cursor.

Optionally, the mobile terminal further includes:
a slide determining unit, configured to, if displacement of the finger image is greater than a preset distance, and if a time used for moving the finger image from a previous position to a current position is less than a preset time limit, determine that the current operation is a slide operation.

Optionally, the mobile terminal further includes:
a calibration unit, configured to receive a calibration instruction, acquire a calibration position of the finger image, and store three-dimensional coordinates of the calibration position as an original position.

Optionally, the tap determining unit includes:
a first determining module, configured to, if the three-dimensional cursor leaves the position of the operation icon when the hover time of the three-dimensional cursor over the operation icon reaches a short tap time but does not reach a touch and hold time, determine that the current operation is a short tap operation; and
a second determining module, configured to, if the hover time of the three-dimensional cursor over the operation icon reaches the touch and hold time, determine that the current operation is a touch and hold tap operation.

Optionally, the cursor generating unit is further configured to acquire a current position of the finger image by using the original position as a reference position, determine three-dimensional coordinates of the three-dimensional cursor in the three-dimensional display interface according to the reference position and image information of the current position, and generate the three-dimensional cursor on the three-dimensional coordinates.

It can be learned from the foregoing technical solutions that, a mobile terminal in embodiments of the present invention may acquire a finger image by using a photographing unit, and generate, according to image information of the finger image, a three-dimensional cursor in a three-dimensional display interface corresponding to the image information. A user may operate the three-dimensional cursor to move in the three-dimensional display interface by moving a finger in three-dimensional space (within a photographing range of the photographing unit of the mobile terminal), so as to implement a visually three-dimensional cursor operation.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, a person of ordinary skill in the art may still derive other drawings from these accompanying drawings without creative efforts.
FIG. 1 is a schematic flowchart of a three-dimensional display-based cursor operation method according to an embodiment of the present invention;
FIG. 2 is a schematic operational diagram of a hierarchical overlapping display technology according to an embodiment of the present invention;
FIG. 3 is another schematic flowchart of a three-dimensional display-based cursor operation method according to an embodiment of the present invention; and
FIG. 4 is a schematic structural diagram of a mobile terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

The embodiments of the present invention provide a three-dimensional display-based cursor operation method and a mobile terminal, which are used to implement a visually three-dimensional cursor operation on a three-dimensional display mobile terminal.

In an embodiment of the present invention, the following uses a mobile terminal as an example to describe an embodiment of a three-dimensional display-based cursor operation method. It may be understood that the example does not constitute a limitation on the present invention.

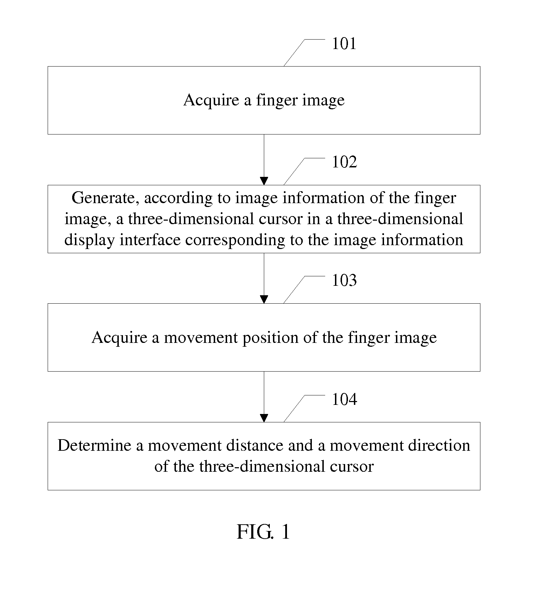

Referring to FIG. 1, the embodiment of the three-dimensional display-based cursor operation method in this embodiment of the present invention includes:
101: Acquire a finger image.

The mobile terminal acquires a finger image, where the finger image is an image having a finger feature.

Specifically, after a three-dimensional display mode is started, a photographing unit of the mobile terminal collects a photographed image. The mobile terminal identifies whether the collected photographed image is the finger image (that is, the photographed image matches the finger feature preset on the mobile terminal), and if yes, the finger image is successfully acquired.

Optionally, a maximum range for acquiring the finger image may be a range in which the photographing unit of the mobile terminal can photograph images.

Optionally, the photographing unit for acquiring the finger image may be disposed in the front of a display screen (that is, a user's finger needs to perform an operation above the display screen), and the photographing unit for acquiring the finger image may also be disposed in the back of the display screen (that is, the user's finger needs to perform an operation below the display screen).

102: Generate, according to image information of the finger image, a three-dimensional cursor in a three-dimensional display interface corresponding to the image information.

After successfully acquiring the finger image, the mobile terminal generates, according to the image information of the finger image, the three-dimensional cursor in the three-dimensional display interface corresponding to the image information.

Optionally, before a user performs any setting, if the user needs to operate the three-dimensional cursor to move, the mobile terminal may use a position of a camera as an original position, and the original position is a reference position for determining an orientation of the three-dimensional cursor. For example, if the position of the camera is used as the original position, a corresponding position of the original position in a three-dimensional display screen is a middle position of the screen. The mobile terminal calculates a distance and a direction of the finger image relative to the original position, and converts, according to a preset proportional coefficient, the distance and direction into a position of the three-dimensional cursor in the three-dimensional display screen. Specifically, a current position of the finger image is acquired by using the original position as the reference position, three-dimensional coordinates of the three-dimensional cursor in the three-dimensional display interface are determined according to the reference position and image information of the current position, and the three-dimensional cursor is generated on the three-dimensional coordinates.

Optionally, in an actual application, when the three-dimensional display mode is used for the first time, the user may perform some initial settings, such as calibration of the original position. The photographing unit of the mobile terminal acquires a finger image in any position (within a photographing range of the photographing unit), and then determines coordinates (X, Y, Z) of the finger image in an image, where coordinate information of X and Y may be obtained, by means of calculation, by determining a position of a central position of a fingertip of a finger in an entire image, and Z coordinate information may be determined according to a size of the finger image. Specifically, the closer is the finger to the photographing unit, the larger is a generated image, and the more pixels are occupied; and on the contrary, the farther is the finger away from the photographing unit, the smaller is the generated image, and the fewer pixels are occupied. Therefore, data information of Z may be obtained by means of calculation only according to an area of the finger image. After the coordinates of the finger image are determined, a position corresponding to the coordinates of the finger image is determined to be the original position. A calibrated original position is an original position that the user considers comfortable for an operation, and subsequently, the mobile terminal uses the calibrated original position as the reference position for determining the orientation of the three-dimensional cursor.

After the three-dimensional cursor is generated, the mobile terminal overlaps, by using a hierarchical overlapping display technology, the generated three-dimensional cursor on a three-dimensional image displayed in the display interface. A focused image of the three-dimensional cursor is located under an LCD surface layer and over a display layer of an operation icon. The user may perform an operation on the three-dimensional cursor by moving the finger in three-dimensional space.

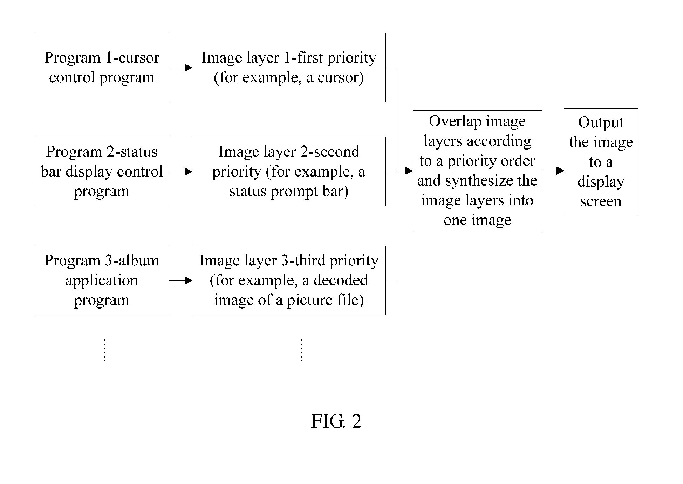

As shown in an example of FIG. 2, for the hierarchical overlapping display technology, a limitation on a display priority is imposed on image layers. For example, for a picture with a third priority and a status prompt box with a second priority, if images are displayed in a certain position, a processing effect after overlapping is that a display of the status prompt box with a high priority overlays a display of the picture. Similarly, a cursor display image with a first priority also overlaps display images at other image layers, ensuring that the cursor can be seen in any case.

That the photographing unit is disposed in the back of the display screen is used as an example. The user only needs to move the finger downwards during an operation, that is, move away from the mobile terminal, the photographing unit determines that a formed image is zoomed out, and therefore the three-dimensional cursor visually moves towards a direction away from the mobile terminal; and on the contrary, the finger gets close to the mobile terminal, the photographing unit determines that a formed image is zoomed in, and therefore the three-dimensional cursor visually moves towards a direction close to the user. A raster technology may be used for imaging the three-dimensional cursor, so that light rays of some dot matrices can only be emitted from specified directions, so as to ensure that a left eye and a right eye of a person can separately see different images, thereby implementing a three-dimensional display effect.

103: Acquire a movement position of the finger image.

After the three-dimensional cursor is generated, the user may perform an operation on the three-dimensional cursor by moving the finger in the three-dimensional space. Specifically, the mobile terminal acquires a movement position of the finger image in real time, and transmits information about the movement position to a movement positioning unit of the mobile terminal, so as to determine a movement track of the three-dimensional cursor in the three-dimensional display interface.

104: Determine a movement distance and a movement direction of the three-dimensional cursor.

After acquiring the movement position of the finger image, the mobile terminal determines the movement distance and the movement direction of the three-dimensional cursor according to the movement position. In an actual application, as a hand moves up and down or left and right, the photographing unit collects a position of a held-out finger of the hand, and controls the three-dimensional cursor to move up and down or left and right along with the finger.

Exemplarily, the photographing unit of the mobile terminal photographs the finger image at a speed of N frames per second, and synchronously transmits the obtained photographed image to the movement positioning unit to calculate a track of the three-dimensional cursor.

A mobile terminal of the present invention may acquire a finger image by using a photographing unit, and after successfully acquiring the finger image, generate, according to image information of the finger image, a three-dimensional cursor in a three-dimensional display interface corresponding to the image information. A user may operate the three-dimensional cursor to move in the three-dimensional display interface by moving a finger in three-dimensional space (within a shooting range of the photographing unit of the mobile terminal), so as to implement a visually three-dimensional cursor operation and improve user experience.

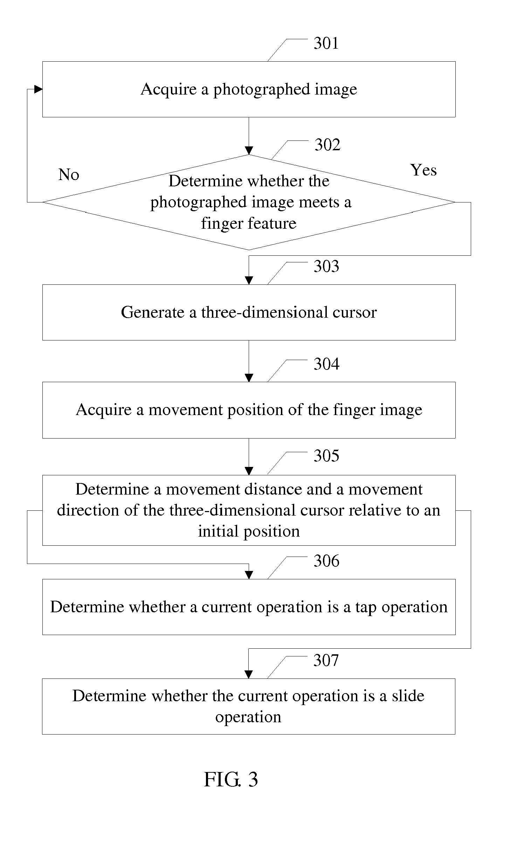

The following describes specific operations of the three-dimensional cursor. Referring to FIG. 3, another embodiment of a three-dimensional display-based cursor operation method in an embodiment of the present invention includes:
301: Acquire a photographed image.

A mobile terminal acquires a photographed image. Specifically, after a user sends a three-dimensional operation instruction (which may be a tap operation) to the mobile terminal, a photographing unit of the mobile terminal may start acquiring a photographed image.

Optionally, the mobile terminal may receive a calibration instruction before acquiring a photographed image, and then trigger the photographing unit to calibrate a position of the acquired finger image. Specifically, the mobile terminal acquires a calibration position of the finger image; and stores three-dimensional coordinates of the calibration position as an original position, where a purpose of the calibration is to determine a correspondence between a hand position and a virtual cursor display position. For example, some people have big hands, some people have small hands, some people like performing an operation with a hand closer to the mobile terminal, and some people like performing an operation in a farther position. In this way, the mobile terminal may provide a calibration mode, and in this mode, a hand is firstly placed in a position in which a user considers most comfortable for an operation, and the photographing unit collects the position (an original position), and records the position as a position in which the three-dimensional cursor is displayed in a central origin. Subsequently, when the hand moves relative to the position collected by the photographing unit, the mobile terminal may control the three-dimensional cursor to move relative to a position of the central origin.

Optionally, the photographing unit for acquiring the finger image may be disposed in the front of a display screen (that is, a user's finger needs to perform an operation above the display screen), and the photographing unit for acquiring the finger image may also be disposed in the back of the display screen (that is, the user's finger needs to perform an operation below the display screen).

302: Determine whether the photographed image meets a finger feature.

After acquiring the photographed image, the mobile terminal determines whether the photographed image meets a finger feature, and if yes, determines that the finger image is successfully acquired, and executes step 203; and if no, continues to acquire a photographed image.

The finger feature includes a finger thickness ratio and knuckle information. Further, the finger feature may further include other information. For example, if the photographing unit for acquiring the finger image may be disposed in the front of the display screen, the finger feature may also be a fingerprint; and if the photographing unit for acquiring the finger image may be disposed in the back of the display screen, the finger feature may also be a fingernail. Furthermore, the finger feature may also include a chrominance range of a finger skin color.

303: Generate a three-dimensional cursor.

After successfully acquiring the finger image, the mobile terminal generates, according to image information of the finger image, a three-dimensional cursor in a three-dimensional display interface corresponding to the image information.

In an actual application, the user may tap the three-dimensional operation instruction of the mobile terminal, and instruct the mobile terminal to acquire a photographed image by using the photographing unit. When the photographed image meets the finger feature, the three-dimensional cursor may be generated in the three-dimensional display interface.

In addition, when acquiring the finger image, the mobile terminal may further acquire N finger images to perform multi-point touch control. Specifically, after determining that the N finger images are acquired, the mobile terminal simultaneously reports position information of the N finger images, generates N three-dimensional cursors accordingly, and implements a multi-point touch control function according to relative movements of the N three-dimensional cursors. For example, when a thumb and an index finger are held out simultaneously, it indicates that the user wants to perform a two-point touch operation. In this case, after the photographing unit determines that two fingers of the hand are held out, two three-dimensional cursors are simultaneously displayed at a same display layer according to corresponding positions of the two fingers. When a distance between the thumb and the index finger is increased, it may be determined that the operation is a "zoom-in operation", and when the distance between the thumb and the index finger is decreased, it may be determined that the operation is a "zoom-out operation". It may be understood that the foregoing describes only an example of some functions triggered for the two-point touch control, and the two-point touch control may further implement more functions, which are not limited herein.

304: Acquire a movement position of the finger image.

After the three-dimensional cursor is generated, the user may perform an operation on the three-dimensional cursor by moving the finger in three-dimensional space. Specifically, the mobile terminal acquires a movement position of the finger image in real time, and transmits information about the movement position to a movement positioning unit of the mobile terminal, so as to determine a movement track of the three-dimensional cursor in the three-dimensional display interface.

305: Determine a movement distance and a movement direction of the three-dimensional cursor.

After acquiring the movement position of the finger image, the mobile terminal determines the movement distance and the movement direction of the three-dimensional cursor according to the movement position. In an actual application, as a hand moves up and down or left and right, the photographing unit collects a position of a held-out finger of the hand, and controls the three-dimensional cursor to move up and down or left and right along with the finger.

Exemplarily, the photographing unit of the mobile terminal photographs the finger image at a speed of N frames per second, and synchronously transmits the obtained photographed image to the movement positioning unit to calculate a track of the three-dimensional cursor.

Specifically, a movement ratio of the finger image to the three-dimensional cursor, for example, 5:1, is preset in the mobile terminal. That is, the finger image horizontally moves five centimeters, and the three-dimensional cursor horizontally moves one centimeter. In addition, if the finger image has displacement in a vertical direction, in addition to the movement ratio, the mobile terminal also needs to calculate the movement distance and the movement direction of the three-dimensional cursor in the three-dimensional display interface according to a three-dimensional visual effect.

Specifically, a principle for calculating a movement position of the three-dimensional cursor is as follows: Firstly, it is assumed that corresponding cursor coordinates are in the very center of a display area when the finger is in a position with coordinates (X, Y, Z), and that dimensions, namely, a length, a height and a depth (three-dimensional display) of the display area are (A, B, C) respectively, coordinates of a corresponding cursor origin are (A/2, B/2, C/2). According to such a correspondence, new coordinates are (x, y, z) when the finger moves; therefore, a difference (x-X, y-Y, z-Z) between a current finger position and a finger origin position may be obtained by means of calculation; then a preset proportional coefficient m is multiplied (where the proportional coefficient is used to convert a multiple between a finger displacement distance and a cursor displacement distance, for example, the finger moves one centimeter, and the corresponding cursor moves three pixels); and in this way, a current cursor position {A/2+m(x-X), B/2+m(y-Y), C/2+m(z-Z)} may be obtained.

306: Determine whether a current operation is a tap operation.

During a process in which the user operates the three-dimensional cursor to move, if the three-dimensional cursor moves to a position of an operation icon in the three-dimensional display interface, it is determined whether the three-dimensional cursor coincides with three-dimensional coordinates of the operation icon, and if yes, it is determined whether the current operation is a tap operation according to a hover time of the three-dimensional cursor. After it is determined that the current operation is a tap operation, a function link corresponding to the operation icon may be triggered. The operation icon is an icon linked with a reported event, and the operation icon may be a graphic icon, a digital icon, or a string of link address.

In an actual application, a time for determining the tap operation may be preset on the mobile terminal, and when the hover time of the three-dimensional cursor reaches the time for determining the tap operation, it is determined that the current operation is the tap operation. Further, the time for determining the tap operation may be further divided into a short tap time and a touch and hold time, and the short tap time and the touch and hold time separately correspond to different tap operations. Specifically, when the hover time of the three-dimensional cursor is more than the short tap time and less than the touch and hold time (that is, the three-dimensional cursor leaves a current position after hovering for the short tap time), it is determined that the current cursor operation is a short tap operation; and when the hover time of the three-dimensional cursor is more than the touch and hold time, it is determined that the current cursor operation is a touch and hold tap operation.

307: Determine whether the current operation is a slide operation.

Optionally, after acquiring the movement position of the finger image, the mobile terminal may determine whether displacement of the finger image is greater than a preset distance, and determine whether a time used for moving the finger image from a previous position to the current position is less than a preset time limit. If the displacement of the finger image is greater than the preset distance, and if the time used for moving the finger image from the previous position to the current position is less than the preset time limit, it is determined that the current operation is a slide operation, and the mobile terminal may switch a current display interface or implement another sliding function according to a sliding direction.

In the prior art, in a case of two-dimensional display, only slide operations of a two-dimensional scenario, such as up, down, left, and right, can be implemented on a touchscreen. In this embodiment of the present invention, three-dimensional slide operations may be implemented, that is, operations of sliding close and away may further be implemented. For example, when a user quickly moves a finger down after tapping a target icon, a photographing unit determines that a rate and an extent of the down movement reach preset thresholds, and therefore determines that a sliding away event occurs, and feeds back a result to an application layer to execute a corresponding operation, for example, by using this action, to zoom out a currently displayed menu icon or move the icon down to a display layer in a lower position, so as to display more icons. Similarly, when the user quickly moves the finger up after tapping the icon, it may be determined that a sliding close event occurs, and the application layer may execute a corresponding operation after receiving the corresponding event, for example, zoom in the currently displayed menu icon or place the icon at a display layer in an upper position, so as to display the icon more clearly.

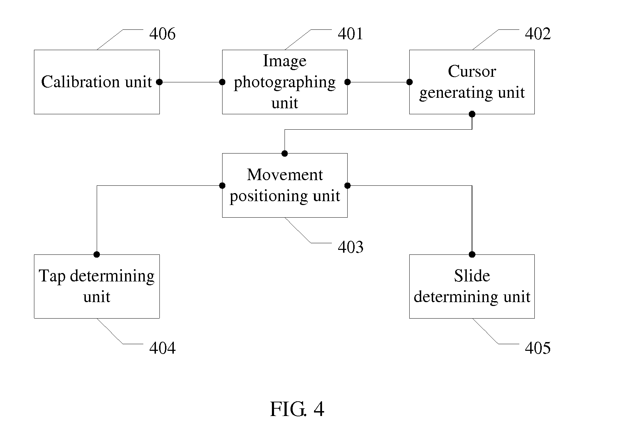

The following describes an embodiment of a mobile terminal for executing the foregoing three-dimensional display-based cursor operation method in the present invention. For a logical structure of the mobile terminal, refer to FIG. 4. The embodiment of the mobile terminal in an embodiment of the present invention includes:
a photographing unit 401, configured to acquire a finger image;
a cursor generating unit 402, configured to generate, according to image information of the finger image, a three-dimensional cursor in a three-dimensional display interface corresponding to the image information; and
a movement positioning unit 403, configured to determine a movement distance and a movement direction of the three-dimensional cursor according to a movement position of the finger image.

Optionally, the mobile terminal in this embodiment of the present invention may further include:
a tap determining unit 404, configured to, when the three-dimensional cursor moves to a position of an operation icon in the three-dimensional display interface, and if the three-dimensional cursor coincides with three-dimensional coordinates of the operation icon, determine whether a current operation is a tap operation according to a hover time of the three-dimensional cursor;
a slide determining unit 405, configured to, if displacement of the finger image is greater than a preset distance, and if a time used for moving the finger image from a previous position to a current position is less than a preset time limit, determine that the current operation is a slide operation; and
a calibration unit 406, configured to receive a calibration instruction, acquire a calibration position of the finger image, and store three-dimensional coordinates of the calibration position as an original position.

Optionally, the tap determining unit in this embodiment of the present invention further includes:
a first determining module, configured to, if the three-dimensional cursor leaves the position of the operation icon when the hover time of the three-dimensional cursor over the operation icon reaches a short tap time but does not reach a touch and hold time, determine that the current operation is a short tap operation; and
a second determining module, configured to, if the hover time of the three-dimensional cursor over the operation icon reaches the touch and hold time, determine that the current operation is a touch and hold tap operation.

The cursor generating unit 402 is further configured to acquire a current position of the finger image by using the original position as a reference position, determine three-dimensional coordinates of the three-dimensional cursor in the three-dimensional display interface according to the reference position and image information of the current position, and generate the three-dimensional cursor on the three-dimensional coordinates.

A specific operation process of each unit of the mobile terminal in this embodiment of the present invention is as follows:
After entering a three-dimensional operation mode, the photographing unit 401 of the mobile terminal acquires a finger image, where the finger image is an image having a finger feature. The finger feature includes a finger thickness ratio and knuckle information. Further, the finger feature may further include other information. For example, if the photographing unit for acquiring the finger image may be disposed in the front of the display screen, the finger feature may further be a fingerprint; and if the photographing unit for acquiring the finger image may be disposed in the back of the display screen, the finger feature may further be a fingernail. Furthermore, the finger feature may further include a chrominance range of a finger skin color.

After the three-dimensional cursor is generated, the mobile terminal overlaps, by using a hierarchical overlapping display technology, the generated three-dimensional cursor on a three-dimensional image displayed in the display interface. A focused image of the three-dimensional cursor is located under an LCD surface layer and over a display layer of an operation icon. A user may operate the three-dimensional cursor by moving a finger in three-dimensional space. As shown in an example of FIG. 2, for the hierarchical overlapping display technology, a limitation on a display priority is imposed on image layers. For example, for a picture with a third priority and a status prompt box with a second priority, if images are displayed in a certain position, a processing effect after overlapping is that a display of the status prompt box with a high priority overlays a display of the picture. Similarly, a cursor display image with a first priority also overlays display images at other image layers, ensuring that the cursor can be seen in any case.

Optionally, the photographing unit for acquiring the finger image may be disposed in the front of a display screen (that is, a user's finger needs to perform an operation above the display screen), and the photographing unit for acquiring the finger image may also be disposed in the back of the display screen (that is, the user's finger needs to perform an operation below the display screen).

After the mobile terminal successfully acquires the finger image, the cursor generating unit 402 generates, according to image information of the finger image, a three-dimensional cursor in the three-dimensional display interface corresponding to the image information.

Optionally, before a user performs any setting, if the user needs to operate the three-dimensional cursor to move, the mobile terminal may use a position of a camera as an original position, and the original position is a reference position for determining an orientation of the three-dimensional cursor. For example, if the position of the camera is used as the original position, a corresponding position of the original position in a three-dimensional display screen is a middle position of the screen. The mobile terminal calculates a distance and a direction of the finger image relative to the original position, and converts, according to a preset proportional coefficient, the distance and direction into a position of the three-dimensional cursor in the three-dimensional display screen. Specifically, a current position of the finger image is acquired by using the original position as a reference position, three-dimensional coordinates of the three-dimensional cursor in the three-dimensional display interface are determined according to the reference position and image information of the current position, and the three-dimensional cursor is generated on the three-dimensional coordinates.

Optionally, in an actual application, when the three-dimensional display mode is used for the first time, the user may perform some initial settings, such as calibration of the original position. Specifically, the calibration unit 406 of the mobile terminal receives a calibration instruction, and triggers the photographing unit 401 to acquire a calibration position of the finger image, and then determines coordinates (X, Y, and Z) of the finger image in an image, where X and Y coordinates information may be obtained, by means of calculation by determining a position of a central position of a fingertip of a finger in an entire image, and Z coordinate information may be determined according to a size of the finger image. Specifically, the closer is the finger to the photographing unit, the greater is a generated image, and the more pixels are occupied; and on the contrary, the farther is the finger away from the photographing unit, the smaller is the generated image, and the fewer pixels are occupied. Therefore, data information of Z may be obtained by means of calculation only according to an area of the finger image. After the coordinates of the finger image are determined, a position corresponding to the coordinates of the finger image is determined to be the original position. A calibrated original position is an original position that the user considers comfortable for an operation, and subsequently, the mobile terminal uses the calibrated original position as the reference position for determining the orientation of the three-dimensional cursor.

In addition, when acquiring the finger image, the photographing unit 401 may further acquire N finger images to perform multi-point touch control. Specifically, after determining that N finger images are acquired, the photographing unit 401 simultaneously reports position information of the N finger images, generates N three-dimensional cursors correspondingly, and implements a multi-point touch control function according to relative movements of the N three-dimensional cursors. For example, when a thumb and an index finger are held out simultaneously, it indicates that the user wants to perform a two-point touch operation. In this case, after the photographing unit determines that two fingers of the hand are held out, two three-dimensional cursors are simultaneously displayed at a same display layer according to corresponding positions of the two fingers. When a distance between the thumb and the index finger is increased, it may be determined that the operation is a "zoom-in operation", and when the distance between the thumb and the index finger is decreased, it may be determined that the operation is a "zoom-out operation". It may be understood that the foregoing describes only an example of some functions triggered for the two-point touch control, and the two-point touch control may further implement more functions, which are not limited herein.

After the three-dimensional cursor is generated, the user may operate the three-dimensional cursor by moving the finger in three-dimensional space. Specifically, the photographing unit 401 acquires a movement position of the finger image, and transmits information about the movement position to the movement positioning unit 403 of the mobile terminal, so as to determine a movement track of the three-dimensional cursor in the three-dimensional display interface; and the movement positioning unit 403 determines a movement distance and a movement direction of the three-dimensional cursor according to the movement position. In an actual application, as a hand moves up and down or left and right, the photographing unit collects a position of a held-out finger of the hand, and controls the three-dimensional cursor to move up and down or left and right along with the finger. Exemplarily, the photographing unit of the mobile terminal shoots the finger image at a speed of N frames per second, and synchronously transmits the obtained photographed image to the movement positioning unit to calculate a track of the three-dimensional cursor. Specifically, a movement ratio of the finger image to the three-dimensional cursor, for example, 5:1, is preset in the mobile terminal. That is, the finger image horizontally moves five centimeters, and the three-dimensional cursor horizontally moves one centimeter. In addition, if the finger image has displacement in a vertical direction, in addition to the movement ratio, the mobile terminal also needs to calculate the movement distance and the movement direction of the three-dimensional cursor in the three-dimensional display interface according to a three-dimensional visual effect.

Specifically, a principle for calculating a movement position of the three-dimensional cursor is as follows: Firstly, it is assumed that corresponding cursor coordinates are in the very center of a display area when the finger is in a position with coordinates (X, Y, and Z), and that dimensions, namely, a length, a height and a depth (three-dimensional display) of the display area are (A, B, C) respectively, coordinates of a corresponding cursor origin are (A/2, B/2, C/2). According to such a correspondence, new coordinates are (x, y, z) when the finger moves; therefore, a difference (x-X, y-Y, z-Z) between a current finger position and a finger origin position may be obtained by means of calculation; then a preset proportional coefficient m is multiplied (where the proportional coefficient is used to convert a multiple between a finger displacement distance and a cursor displacement distance, for example, the finger moves one centimeter, and the corresponding cursor moves three pixels); and in this way, a current cursor position {A/2+m(x-X), B/2+m(y-Y), C/2+m(z-Z)} may be obtained.

During a process in which the user operates the three-dimensional cursor to move, if the three-dimensional cursor moves to a position of an operation icon in the three-dimensional display interface, the tap determining unit 404 determines whether the three-dimensional cursor coincides with three-dimensional coordinates of the operation icon, and if yes, the tap determining unit 404 determines whether the current operation is a tap operation according to a hover time of the three-dimensional cursor. After it is determined that the current operation is a tap operation, a function link corresponding to the operation icon may be triggered. The operation icon is an icon linked with a reported event, and the operation icon may be a graphic icon, a digital icon, or a string of link address. In an actual application, a time for determining the tap operation may be preset in the mobile terminal, and when the hover time of the three-dimensional cursor reaches the time for determining the tap operation, it is determined that the current operation is the tap operation. Further, the time for determining the tap operation may be further divided into a short tap time and a touch and hold time, and the short tap time and the touch and hold time separately correspond to different tap operations. Specifically, when the hover time of the three-dimensional cursor is more than the short tap time and less than the touch and hold time (that is, the three-dimensional cursor leaves a current position after hovering for the short tap time), it is determined that the current cursor operation is a short tap operation; and when the hover time of the three-dimensional cursor is more than the touch and hold time, it is determined that the current cursor operation is a touch and hold tap operation.

Optionally, after acquiring the movement position of the finger image, the slide determining unit 405 may determine whether displacement of the finger image is greater than a preset distance, and determine whether a time used for moving the finger image from a previous position to the current position is less than a preset time limit. If displacement of the finger image is greater than the preset distance and if the time used for moving the finger image from the previous position to the current position is less than the preset time limit, it is determined that the current operation is a slide operation, and the mobile terminal may, according to a sliding direction, switch a current display interface or implement another sliding function.

In the prior art, in a case of two-dimensional display, only slide operations of a two-dimensional scenario, such as up, down, left, and right, can be implemented on a touchscreen. In this embodiment of the present invention, three-dimensional slide operations may be implemented, that is, operations of sliding close and away may further be implemented. For example, when a user quickly moves a finger down after tapping a target icon, a photographing unit determines that a rate and an extent of the down movement reach preset thresholds, and therefore determines that a sliding away event occurs, and feeds back a result to an application layer to execute a corresponding operation, for example, by using this action, to zoom out a currently displayed menu icon or move the icon down to a display layer in a lower position, so as to display more icons. Similarly, when the user quickly moves the finger up after tapping the icon, it may be determined that a sliding close event occurs, and the application layer may execute a corresponding operation after receiving the corresponding event, for example, zoom in the currently displayed menu icon or place the icon at a display layer in an upper position, so as to display the icon more clearly.

In the several embodiments provided in the present application, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A three-dimensional display-based cursor operation method, comprising:
acquiring a finger image;
generating, according to image information of the finger image, a three-dimensional cursor in a three-dimensional display interface corresponding to the image information;
acquiring a movement position of the finger image; and
determining a movement distance and a movement direction of the three-dimensional cursor according to the movement position.

2. The method according to claim 1, wherein after the determining a movement distance and a movement direction of the three-dimensional cursor according to the movement position, the method comprises:
when the three-dimensional cursor moves to a position of an operation icon in the three-dimensional display interface, and if the three-dimensional cursor coincides with three-dimensional coordinates of the operation icon, determining whether a current operation is a tap operation according to a hover time of the three-dimensional cursor.

3. The method according to claim 2, wherein the determining whether a current operation is a tap operation according to a hover time of the three-dimensional cursor comprises:
if the three-dimensional cursor leaves the position of the operation icon when the hover time of the three-dimensional cursor over the operation icon reaches a short tap time but does not reach a touch and hold time, determining that the current operation is a short tap operation; and
if the hover time of the three-dimensional cursor over the operation icon reaches the touch and hold time, determining that the current operation is a touch and hold tap operation.

4. The method according to any one of claims 1 to 3, wherein after the determining a movement distance and a movement direction of the three-dimensional cursor according to the movement position, the method further comprises:
if displacement of the finger image is greater than a preset distance, and if a time used for moving the finger image from a previous position to a current position is less than a preset time limit, determining that the current operation is a slide operation.

5. The method according to claim 1, wherein after the acquiring a finger image, the method comprises:
generating N three-dimensional cursors if N finger images are acquired, and implementing a function of N-point touch control according to relative movements of the N three-dimensional cursors, wherein N is an integer greater than or equal to 2.

6. The method according to any one of claims 1 to 5, wherein the method further comprises:
receiving a calibration instruction;
acquiring a calibration position of the finger image; and
storing three-dimensional coordinates of the calibration position as an original position.

7. The method according to claim 6, wherein the generating, according to image information of the finger image, a three-dimensional cursor in a three-dimensional display interface corresponding to the image information comprises:
acquiring a current position of the finger image by using the original position as a reference position, determining three-dimensional coordinates of the three-dimensional cursor in the three-dimensional display interface according to the reference position and image information of the current position, and generating the three-dimensional cursor on the three-dimensional coordinates.

8. The method according to any one of claims 1 to 7, wherein the acquiring a finger image comprises:
acquiring a photographed image; and
determining that the photographed image is the acquired finger image if the photographed image meets a finger feature, wherein the finger feature comprises a finger thickness ratio and knuckle information.

9. A mobile terminal, comprising:
a photographing unit, configured to acquire a finger image;
a cursor generating unit, configured to generate, according to image information of the finger image, a three-dimensional cursor in a three-dimensional display interface corresponding to the image information; and
a movement positioning unit, configured to determine a movement distance and a movement direction of the three-dimensional cursor according to a movement position of the finger image.

10. The mobile terminal according to claim 9, wherein the mobile terminal further comprises:
a tap determining unit, configured to, when the three-dimensional cursor moves to a position of an operation icon in the three-dimensional display interface, and if the three-dimensional cursor coincides with three-dimensional coordinates of the operation icon, determine whether a current operation is a tap operation according to a hover time of the three-dimensional cursor.

11. The mobile terminal according to claim 9 or 10, wherein the mobile terminal further comprises:
a slide determining unit, configured to, if displacement of the finger image is greater than a preset distance, and if a time used for moving the finger image from a previous position to a current position is less than a preset time limit, determine that the current operation is a slide operation.

12. The mobile terminal according to claim 9 or 10, wherein the mobile terminal further comprises:
a calibration unit, configured to receive a calibration instruction, acquire a calibration position of the finger image, and store three-dimensional coordinates of the calibration position as an original position.

13. The mobile terminal according to claim 10, wherein the tap determining unit comprises:
a first determining module, configured to, if the three-dimensional cursor leaves the position of the operation icon when the hover time of the three-dimensional cursor over the operation icon reaches a short tap time but does not reach a touch and hold time, determine that the current operation is a short tap operation; and
a second determining module, configured to, if the hover time of the three-dimensional cursor over the operation icon reaches the touch and hold time, determine that the current operation is a touch and hold tap operation.

14. The mobile terminal according to claim 12, wherein the cursor generating unit is further configured to acquire a current position of the finger image by using the original position as a reference position, determine three-dimensional coordinates of the three-dimensional cursor in the three-dimensional display interface according to the reference position and image information of the current position, and generate the three-dimensional cursor on the three-dimensional coordinates.
